# EUROPEAN PATENT APPLICATION

(11) **EP 4 216 492 A1**
(43) Date of publication of application: **26.07.2023**
(21) Application number: 23153339.9
(22) Date of filing: 25.01.2023
(51) Int. Cl.: H04L 9/40, G06F 21/62, G06Q 50/26

(54) **SYSTEMS AND METHODS FOR PERFORMING SECURE DIGITAL FORENSICS INVESTIGATIONS USING A HYBRID OF ON-PREMISES AND CLOUD-BASED RESOURCES**

(30) Priority: 25.01.2022 US 202263302963 P
(71) Applicant: Magnet Forensics Inc., Waterloo, ON N2K 0A8 (CA)
(72) Inventor: SALIBA, Jad John, Waterloo N2K 0A8, N2K 0A8 (CA); UZUN, Tayfun, Waterloo, Ontario, N2K 0A8 (CA); MACGILLIVRAY, Geoffrey Wendell, Waterloo, Ontario, N2K 0A8 (CA); WILLIAMSON, Mike, Waterloo, Ontario, N2K 0A8 (CA); VANCE, Christopher, Waterloo, Ontario, N2K 0A8 (CA); BTYANT, Cody, Waterloo, Ontario, N2K 0A8 (CA)
(74) Representative: Humphrey-Evans, Edward John

(57) **Abstract**

Computer systems and methods for managing sensitive data items when performing a computer-implemented digital forensic workflow using on-premises ("on-prem") and cloud resources are provided. The system includes a control computing node configured to: store the digital forensic workflow in a memory; and allocate forensic data processing tasks corresponding to portions of the digital forensic workflow to processing node computing devices ("processing nodes") for execution by the processing nodes, the processing nodes communicatively connected to the control computing node via at least one data communication network and including at least one cloud processing node and at least one on-premises ("on-prem") processing node. The control computing node automatically restricts allocation of a given forensic data processing task to the at least one on-prem processing node when forensic data to be operated on in performance of the given processing task is tagged as sensitive.

## Description

### Technical Field

The following relates generally to digital forensics, and more particularly to computer systems and methods for processing and storing digital forensic evidence for forensic investigation via a hybrid of on-premises ("on-prem") and cloud-based computing resources.

### Introduction

The performance of digital forensic investigations can require significant computing resources due the large volumes of electronically stored information that must often be collected from various devices and then stored, processed, and analyzed to enable effective investigation.

Cloud computing technologies have emerged as a preferred approach to implementing computer systems due to benefits such as flexibility, efficiency, and improved opportunities for collaboration among users, among others. Cloud-based applications may obviate the need for application providers to maintain a physical storage location through cloud hosting, which can be attractive. Cloud-hosted solutions are generally more efficient at processing and reviewing digital evidence.

As a result, there is a common desire to move applications to the cloud to provide the aforementioned benefits to application providers and to enhance capabilities of applications to provide improved solutions to users.

Digital forensic investigations can often involve sensitive data, such as pictures, videos, or other files including sensitive content, or the potential for discovery of sensitive data. As such, the processing and storing of digital forensic evidence in the cloud raises security concerns for forensic investigators as such data is no longer under the control of the application provider.

Accordingly, systems and methods for performing digital forensic investigation are desired that can utilize cloud computing when appropriate while also offering adequate protection for sensitive data.

### Summary

A computer system for managing sensitive data items when performing a computer-implemented digital forensic workflow using on-premises ("on-prem") and cloud resources is provided. The system includes a control computing node configured to: store the digital forensic workflow in a memory; and allocate forensic data processing tasks corresponding to portions of the digital forensic workflow to processing node computing devices ("processing nodes") for execution by the processing nodes, the processing nodes communicatively connected to the control computing node via at least one data communication network and including at least one cloud processing node and at least one on-premises ("on-prem") processing node. The control computing node automatically restricts allocation of a given forensic data processing task to the at least one on-prem processing node when forensic data to be operated on in performance of the given processing task is tagged as sensitive.

The control computing node may be further configured to: allocate storage of data outputs generated by the performance of the allocated forensic data processing tasks by the processing nodes to data storage devices ("storage nodes"), each of the storage nodes communicatively connected to at least one of the control computing node and the processing nodes via the at least one data communication network, the storage nodes including at least one cloud storage node and at least one on-prem storage node; and automatically restrict the allocation of storage of a given data output to the at least one on-prem storage node when the data output is tagged as sensitive.

Allocating the given forensic data processing task may include instructing the processing node to execute the given forensic data processing task via a digital forensic software application and a sensitive data detection module installed on the processing node.

The digital forensic software application and the sensitive data detection module may be deployed to the processing node by the control computing node when allocating the given forensic data processing task.

The digital forensic software application may generate the given data output and the sensitive data detection module may be configured to detect whether the given data output generated by the forensic software application includes sensitive data and tag the given data output as sensitive if sensitive data is detected.

The sensitive data detection module may be further configured to generate an output indicating that the given data output is sensitive for communication from the processing node to the control computing node and the control computing node may restrict storage of the given data output to the at least one on-prem storage node based on the received output.

The control computing node may store a list of available processing and storage nodes in the memory, the list of available nodes including a node identifier for each node in the list that identifies the node as on-prem or cloud, wherein the control computing node references the list of available nodes when allocating the forensic data processing tasks and the storage of data outputs, and the control computing node may be configured to select only from those nodes in the list of available nodes having a node identifier identifying the node as on-prem when (i) the forensic data to be operated on in performance of the given processing task is tagged as sensitive or (ii) when the data output generated in the performance of the given processing task is tagged as sensitive.

The digital forensic software application may be a forensic data acquisition application, and the given data output may be generated by the forensic data acquisition application and includes a forensic image of a data source.

The digital forensic software application may be a forensic data processing engine configured to extract forensic data artifacts from a forensic image, and the given data output generated by the forensic processing engine may include a collection of forensic data artifacts.

The digital forensic software application may be a forensic data analysis application configured to identify relationships between forensic data artifacts and generate a visualization of the identified relationships.

The digital forensic software application may be a forensic data source triage application configured to scan files names in the forensic data for keyword matches.

The sensitive data detection module may be configured to detect sensitive data in the given data output using keyword searching or file path/location searching.

The sensitive data detection module may be configured to detect sensitive data in the given data output by hashing a data item in the given data output and determining whether the hash of the data item matches a reference hash.

The sensitive data detection module may be configured to use one or more artificial intelligence or machine learning algorithms to identify sensitive data in the given data output by matching to one or more sensitive images or patterns.

The control computing node may be configured to allocate forensic data processing tasks to processing nodes according to node allocation rules stored in the memory, the node allocation rules including at least a first set of rules and a second set of rules, and the control computing node may be configured to apply the second set of rules when the forensic data to be operated on is tagged as sensitive.

A computer-implemented method of managing sensitive data items when performing a computer-implemented digital forensic workflow using on-premises ("on-prem") and cloud resources is also provide. The method includes: storing, via a control computing node, the digital forensic workflow in a memory; allocating, via the control computing node, forensic data processing tasks corresponding to portions of the digital forensic workflow to processing node computing devices ("processing nodes") for execution by the processing nodes, the processing nodes communicatively connected to the control computing node via at least one data communication network and including at least one cloud processing node and at least one on-premises ("on-prem") processing node; and automatically restricting, via the control computing node, allocation of a given forensic data processing task to the at least one on-prem processing node when forensic data to be operated on in performance of the given processing task is tagged as sensitive.

A non-transitory computer-readable medium storing computer-executable instructions, the instructions executable by a computer processing to perform a method of managing sensitive data items when performing a computer-implemented digital forensic workflow using on-premises ("on-prem") and cloud resources is also provided. The method includes: storing, via a control computing node, the digital forensic workflow in a memory; allocating, via the control computing node, forensic data processing tasks corresponding to portions of the digital forensic workflow to processing node computing devices ("processing nodes") for execution by the processing nodes, the processing nodes communicatively connected to the control computing node via at least one data communication network and including at least one cloud processing node and at least one on-premises ("on-prem") processing node; and automatically restricting, via the control computing node, allocation of a given forensic data processing task to the at least one on-prem processing node when forensic data to be operated on in performance of the given processing task is tagged as sensitive.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a digital forensic investigation system including on-prem and cloud computing resources, according to an embodiment;
Figure 2 is a flowchart of a method of digital forensic investigation, which may be performed by the system of Figure 1, according to an embodiment;
Figure 3 is a block diagram of a digital forensic investigation system, according to an embodiment;
Figure 4 is a flow diagram of a method of determining how to allocate digital forensic workflow processing tasks to processing nodes, according to an embodiment;
Figure 5 is a flow diagram of a method of performing a distributed digital forensic workflow processing task, allocated at step 410 of Figure 4, by a processing node, according to an embodiment;
Figure 6 is a flow diagram of a method of performing a distributed digital forensic workflow processing task, allocated at step 414 of Figure 4, by a processing node, according to an embodiment;
Figure 7 is block diagram illustrating an example digital forensic workflow which can be executed using distributed processing of workflow tasks using systems of the present disclosure, according to an embodiment;
Figure 8 is a block diagram illustrating another example digital forensic workflow which can be executed using distributed processing of workflow tasks using systems of the present disclosure, according to an embodiment;
Figure 9 is a schematic diagram of a specific example implementation of the system of Figure 1, according to an embodiment; and
Figure 10 is a block diagram of an example computing device, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device. Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present disclosure. Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously. When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to digital forensics, and more particularly to computer systems and methods for processing and storing digital forensic evidence for forensic investigation via a hybrid of on-premises ("on-prem") and cloud-based computing resources. The systems and methods of the present disclosure provide a hybrid computing architecture including cloud-hosted and on-prem computing and storage resources for the performance of digital forensic workflows and distributed digital forensics processing. The systems and methods detect the presence of sensitive data items in forensic data sets and allocate processing and storage tasks to nodes in the system differently according to whether sensitive data items are present. What qualifies as sensitive data may be user configured. Generally, sensitive data can be any data that a user considers sensitive and worthwhile subjecting to more restricted processing and storage rules (e.g. CSAM material, sensitive corporate IP, etc.). The systems and methods may execute a first set of rules for allocating processing and storage tasks to nodes when operating on a forensic data collection that does not include sensitive data items and may execute a second set of rules for allocating processing and storage tasks when operating on a forensic data collection that does include sensitive data items. For example, the first set of rules may be configured to allocate digital forensic workflow tasks to the most suitable resource (e.g. based on deployment constraints or other factors), regardless of whether the resource is an on-prem node or a cloud node, while the second set of rules may be configured to allocate digital forensic workflow tasks to on-prem resources only. What qualifies as sensitive data may vary depending on the application and is not particularly limited provided such data can be detected by the system.

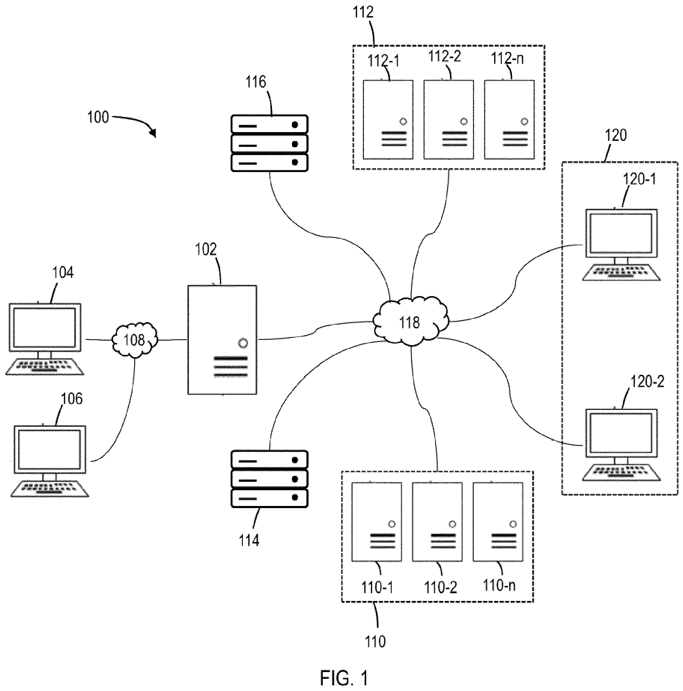

Referring now to Figure 1, shown therein is a block diagram of a digital forensic investigation system 100, according to an embodiment. The digital forensic investigation system 100 includes a control or master node computing device 102 (also referred to herein as "control node" or master node") which communicates with a plurality of on-prem processing node computing devices 110, a plurality of cloud processing node computing devices 112, an on-prem data storage device 114, and a cloud data storage device 116 via a data communication network 118. The control node 102 also communicates with a plurality of user devices 104 and a plurality of administrator device 106 via data communication network 108. The control computing node 102 may be a cloud-hosted computing node or an on-prem computing node. "On-prem" when used in reference to resources such as computing devices and data storage devices refers generally to the fact that the data processed and stored by such devices, and the devices themselves, are under the care and control of the end user of the system (i.e. forensic examiner/investigator, system provider/operator). In contrast, data processed and stored by "cloud" devices (and the devices themselves) are generally under the care and control of the cloud computing provider (e.g., AWS). This care and control aspect (of data and hardware for manipulating the data) can present challenges and concerns in the context of digital forensic investigations, and in particular when there is the potential for the discovery (and thus processing and storage) of sensitive material that either should or cannot (e.g., legally) be transferred out of the care and control of the end user/forensic examiner.

The on-prem processing nodes 110 and cloud processing nodes 112 are operable to communicate with on-prem data storage device 114, cloud data storage device 116, and target endpoint devices 120 via data communication network 118. The cloud processing nodes 112 can be nodes instantiated on a cloud-based computing platform, such as, but not limited to, AMAZON WEB SERVICES^{™}. The control node 102 may be a purpose built machine designed specifically for conducting and managing performance of a digital forensic workflow initiated by a user device 104 through allocating processing tasks related to the workflow to on-prem and cloud processing nodes 110, 112 and storage of forensic data generated by processing nodes 110, 112 to on-prem and cloud data storage devices 114, 116. The control node computing device 102, user device 104, administrator device 106, on-prem processing nodes 110, cloud processing nodes 112, on-prem data storage device 114, cloud data storage device 116, and target endpoint devices 120 may be a server computer, desktop computer, notebook computer, tablet, PDA, smartphone, or any suitable computing device.

The devices 102, 104, 106, 110, 112, 114, 116, 120 may include a connection with the network 118, 108 such as a wired or wireless connection to the Internet. In some cases, the network 20 may include other types of computer or telecommunication networks. The network 118 may include a private on-prem data communication network which includes on-prem processing nodes, on-prem storage device 114, and target endpoint device 120-2. The on-prem network may be a corporate network. The network 118 may include a virtual network connecting cloud-hosted components of system 100. The network 118 may include a gateway or the like for enabling communication between on-prem network components to virtual or public network components.

The devices 102, 104, 106, 110, 112, 114, 116, 120 may include one or more of a memory, a secondary storage device, a processor, an input device, a display device, and an output device. Memory may include random access memory (RAM) or similar types of memory. Also, memory may store one or more applications for execution by processor. Applications may correspond with software modules comprising computer executable instructions to perform processing for the functions described below. Secondary storage device may include a hard disk drive, floppy disk drive, CD drive, DVD drive, Blu-ray drive, or other types of non-volatile data storage. Processor may execute applications, computer readable instructions or programs. The applications, computer readable instructions, or programs may be stored in memory or in secondary storage, or may be received from the Internet or other network 118.

Input device may include any device for entering information into device 102, 104, 106, 110, 112, 114, 116, 120. For example, input device may be a keyboard, keypad, cursor-control device, touch-screen, camera, or microphone. Display device may include any type of device for presenting visual information. For example, display device may be a computer monitor, a flat-screen display, a projector or a display panel. Output device may include any type of device for presenting a hard copy of information, such as a printer for example. Output device may also include other types of output devices such as speakers, for example. In some cases, device 102, 104, 106, 110, 112, 114, 116, 120 may include multiple of any one or more of processors, applications, software modules, secondary storage devices, network connections, input devices, output devices, and display devices.

Although devices 102, 104, 106, 110, 112, 114, 116, 120 are described with various components, one skilled in the art will appreciate that the devices 102, 104, 106, 110, 112, 114, 116, 120 may in some cases contain fewer, additional or different components. In addition, although aspects of an implementation of the devices 102, 104, 106, 110, 112, 114, 116, 120 may be described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM. The computer-readable media may include instructions for controlling the devices 102, 104, 106, 110, 112, 114, 116, 120 and/or processor to perform a particular method.

In the description that follows, devices such as control node 102, processing nodes 110 and 112, storage devices 114 and 116, user devices 104, and administrator devices 106 are described performing certain acts. It will be appreciated that any one or more of these devices may perform an act automatically or in response to an interaction by a user of that device. That is, the user of the device may manipulate one or more input devices (e.g. a touchscreen, a mouse, or a button) causing the device to perform the described act. In many cases, this aspect may not be described below, but it will be understood.

As an example, it is described below that the devices 104, 106, 110, 112, 114, 116, 120 may send information to the control node computing device 102. For example, a forensic examiner user using the user device 104 may manipulate one or more input devices (e.g. a mouse and a keyboard) to interact with a user interface displayed on a display of the user device 104. Generally, the device 104 may receive a user interface from the network 108 (e.g. in the form of a webpage). Alternatively or in addition, a user interface may be stored locally at a device (e.g. a cache of a webpage or a mobile application).

Control node computing device 102 may be configured to receive a plurality of information, from each of the plurality of on-prem processing node devices 110, cloud processing node devices 112, storage devices 114 and 116, administrator devices 106, and user devices 104. Generally, the information may comprise at least an identifier identifying the processing node, storage device, target endpoint device, administrator, or user. For example, the information may comprise one or more of a username, e-mail address, password, etc.

In response to receiving information, the control node computing device 102 may store the information in storage database. The storage may correspond with secondary storage of the device 102, 104, 106, 110, 112, 114, 116, 120. Generally, the storage database may be any suitable storage device such as a hard disk drive, a solid state drive, a memory card, or a disk (e.g. CD, DVD, or Blu-ray etc.). Also, the storage database may be locally connected with control node computing device 102. In some cases, storage database may be located remotely from control node computing device 102 and accessible to control node computing device 102 across a network for example, such as at data storage devices 114, 116. In some cases, storage database may comprise one or more storage devices located at a networked cloud storage provider (e.g. cloud data storage device 116).

The user device 104 may be associated with a user account. Similarly, the administrator device 106 may be associated with an administrator account. Any suitable mechanism for associating a device with an account is expressly contemplated. In some cases, a device may be associated with an account by sending credentials (e.g. a cookie, login, or password etc.) to the control node computing device 102. The control node computing device 102 may verify the credentials (e.g. determine that the received password matches a password associated with the account). If a device is associated with an account, the control node computing device 102 may consider further acts by that device to be associated with that account.

Control node 102 and processing nodes 110, 114 include one or more software applications as described herein. As used herein, the term "software application" or "application" refers to computer-executable instructions, particularly computer-executable instructions stored in a non-transitory medium, such as a non-volatile memory, and executed by a computer processor. The computer processor, when executing the instructions, may receive inputs and transmit outputs to any of a variety of input or output devices to which the computer processor is coupled.

Control node 102 includes a digital forensic investigation software application configured to generate and conduct digital forensic investigation workflows using distributed processing at processing nodes 110, 112. The digital forensic workflow may include various tasks, such as acquiring data from storage media of a target endpoint device 120, processing acquired data to extract data items (e.g. data artifacts and other data items of interest), and analyzing extracted forensic data to generate further forensic investigative insights (e.g. through connections in a forensic data collection and between data items, visualizations, etc.).

The digital forensic investigation software application is configured to allocate processing tasks of the digital forensic investigation workflow to on-prem and cloud processing nodes 110,112 according to rules for node allocation implemented by the control node 102. In particular, the digital forensic investigation software application controls where in the system 100 forensic data is processed and stored, which includes restricting the performance of processing and storage of forensic data to on-prem devices 110, 114 when sensitive data items have been identified in the forensic data that is to be processed or stored. For example, the digital forensic investigation software application may be configured to generate and send commands or messages to other devices in the system 100, such as processing nodes 110, 112. In some cases, commands or messages may be communicated via one or more application programming interfaces (APIs).

The digital forensic investigation software application is further configured to generate user interfaces that can be provided to and displayed at the user device 104 (or administrator device 106) to enable user interaction with the system 100.

For example, the digital forensic investigation software application may include a forensic investigation "dashboard" that can be provided to and displayed at the user device 104 through which the user can cause the system 100 to perform certain tasks (e.g. creation and/or execution of a given forensic investigation workflow) and view forensic data generated by the system 100. For example, the digital forensic investigation software application may be configured to, in response to a user input received from user device 104, retrieve a forensic data collection (or a subset thereof), for example from on-prem data storage device 114 or cloud data storage device 116, and generate a user interface for displaying and examining the data collection. In an embodiment, the digital forensic investigation software application includes a web application configured to communicate with a client application executing on the user device 104 or administrator device 106. In a particular example, the devices 104, 106 may communicate with the control node 102 via a web browser.

The digital forensic investigation software application can access and control or manage the execution of a plurality of pre-configured or pre-defined digital forensic investigation workflows. The pre-configured workflows may be created by a user (such as an administrator or other skilled user) through user interaction with the digital forensic investigation software application at device 104, 106, or may be pre-existing workflows that can be used without the need to create or configure a workflow (e.g. standard workflows offered by the application).

Generally, the digital forensic investigation software application may be configured to load a pre-configured digital forensic investigation workflow and control the execution of the pre-configured workflow by the system 100 (e.g. what devices 110, 112, 114, 116 are used to process and store forensic data). The loading and execution of the digital forensic investigation workflow may be initiated by user input provided to a user interface at administrator or user device 106, 104. For example, the digital forensic investigation software application may retrieve pre-configured workflows (or identifying data thereof) and generate a user interface displaying available pre-configured workflows as selectable workflows. The user may then select the desired workflow and initiate its execution via user input to the user interface at devices 104, 106. In some cases, the forensic investigation software application may generate a visualization of the workflow (such as how the workflow may have appeared to a user when being created, as described below) that can be displayed at the user device 104, 106. By visualizing the workflow in this manner, a user that did not create the workflow can view the workflow and determine how it will work and whether the workflow is appropriate.

In some cases, the digital forensic investigation software application may be configured to create or define a digital forensic investigation workflow for execution by the system 100. The digital forensic investigation workflow may be created from a plurality of pre-configured workflow components (e.g. data sources, processing steps/functions) that can be assembled or combined to form a digital forensic investigation workflow. Combined processing steps/functions can form a digital forensic investigation routine, such as a data acquisition routine or a data processing/refining/extraction routine, which may be subcomponents of the overall workflow. The application may generate a workflow configuration user interface enabling an administrator or user to select and combine pre-existing workflow elements or components (according to accepted rules) and provide the user interface to the administrator device 106. In a particular case, the workflow configuration user interface may include a drag-and-drop interface which includes a panel of selectable workflow elements (each having a graphical representation, such as a common shape for similar workflow steps/elements) and a workflow creation area, where the administrator or user can select a selectable workflow element and move the workflow element onto the workflow creation area to form part of the workflow (i.e. by a drag and drop operation). Once created, the digital forensics investigation workflow may be stored as a pre-configured workflow that can be selected by a user for execution by the system 100.

In operation, the digital forensic investigation software application may be configured to set parameters of sensitive data detection and identification to be performed by the system 100. The digital forensic investigation software application may generate a user interface that enables a user to set parameters of sensitive data detection and provide the user interface to the user device 104. Parameters may include, for example, what detection methods are to be used (e.g. keyword searching, data artifact extraction) and what a given detection method is looking for (e.g. keywords used for keyword searching). Generally, the parameters of sensitive data detection are used to detect or identify a particular type of data item that is deemed sensitive by the user, and thus which should be processed and stored differently by the system 100. In some cases, sensitive data detection may be a component or step of a pre-configured digital forensic investigation workflow. In some cases, sensitive data detection may be automatically included in the workflow by the digital forensic investigation software application, where appropriate (e.g. as part of a forensic data source triaging application, as described herein).

In controlling execution of the digital forensic investigation workflow by the system 100, the digital forensic investigation software application may assign or allocate portions of the digital forensic investigation workflow to specific processing nodes 110, 112. In an example, the digital forensic investigation software application may cause the control node 102 to generate and send a command or message to a processing node 110, 112 to generate a forensic image of a hard drive of a target endpoint device 120 and store the forensic image at a storage device (e.g. data storage device 114 or 116). In another example, the digital forensic investigation software application may cause the control node 102 to generate and send a command or message to a processing node 110, 112 to execute one or more forensic data extraction or refining tools on a forensic image to identify and extract artifacts or data items in the forensic image. In some cases, commands or messages may be communicated via one or more application programming interfaces (APIs).

Generally, the digital forensic investigation software application may be configured to identify a portion of a digital forensic workflow to be executed, determine whether the forensic data collection (or subset thereof) that is to be operated on in the portion of the workflow includes sensitive data items, determine whether to apply a first set of rules for node allocation if the forensic data collection is non-sensitive (includes no identified sensitive data items) or a second set of rules for node allocation if the forensic data collection is sensitive (includes one or more sensitive data items), and allocate the portion of the workflow to a processing node according to the determined node allocation rules. The application may determine whether the forensic data collection includes sensitive data items by whether the data to be processed or stored includes a tag indicating the presence of sensitive data items. The tag may be provided at any one or more of the data item level (i.e. the sensitive data item itself is tagged), at the forensic data collection level (i.e. the forensic data collection which includes the sensitive data item is tagged), and at the forensic investigation level (i.e. the forensic investigation (or case), to which the forensic data collection is related, is tagged).

On-prem processing nodes 110 and cloud processing nodes 112 may have installed thereon one or more software applications for processing forensic data and generating an output. For example, the software applications may include any one or more of a forensic data acquisition software application, a forensic data refining/extraction software application, and a forensic data analysis application. Generally, the different types of applications may be configured to operate on different data inputs to generate different data outputs. The different types of applications represent different tools that can be used at different stages in a forensic workflow. The different data outputs may be stored together as a forensic data collection and/or may be related in the system by a common forensic investigation indicator where the different outputs relate to the same forensic investigation.

In an example, control node 102 may via operation of the forensic investigation software application deploy one or more software applications to an on-prem processing node 110 or cloud processing node 112 (e.g. according to node allocation rules) for the performance of a portion of a digital forensic investigation workflow using the one or more software applications. The control node 102 may send one or more commands to the processing node 110, 112 to perform one or more tasks using the installed forensic software application. The processing node 110, 112 may then use the forensic software application to generate a data output (e.g. forensic image, refined forensic data (e.g. artifacts)), and transmit the data output to control node 102, on-prem or cloud data storage device 114, 116, or to another processing node 110, 112. It should be noted that it is possible that a processing node may be allocated multiple tasks and may thus have multiple software applications installed thereon. In some cases, commands or messages may be communicated via one or more application programming interfaces (APIs).

The processing nodes 110, 112 may also be configured to include a sensitive data detection software module.

For example, the control node 102 may via operation of the forensic investigation software application deploy the sensitive data detection module to a processing node 110, 112. The sensitive data detection module may be a component or inherent feature of a deployed software application to be used to perform an allocated task. The sensitive data detection module may be configured by the control node 102 based on input provided by the user via user device 104, 106. The sensitive data detection module is configured to detect sensitive data items in the data output generated by the processing node 110, 112 that is performing a portion of the digital forensic investigation workflow using the forensic investigation tool / application and communicate results of sensitive data detection to the control node 102. This may include, for example, the sensitive data detection module generating and sending a report or other message to the control node 102 when at least one sensitive data item has been detected. The report may indicate which data items have been identified as sensitive. In some cases, the sensitive data detection module may generate and apply a data tag to the sensitive data item indicating the data item is sensitive data and/or may generate and apply a data tag to the data output of the processing node 110, 112 indicating the data output includes at least one sensitive data item. The sensitive data detection may, in some cases, similarly tag data items and/or the data output of the processing node 110, 112 as non-sensitive when no sensitive data items are detected.

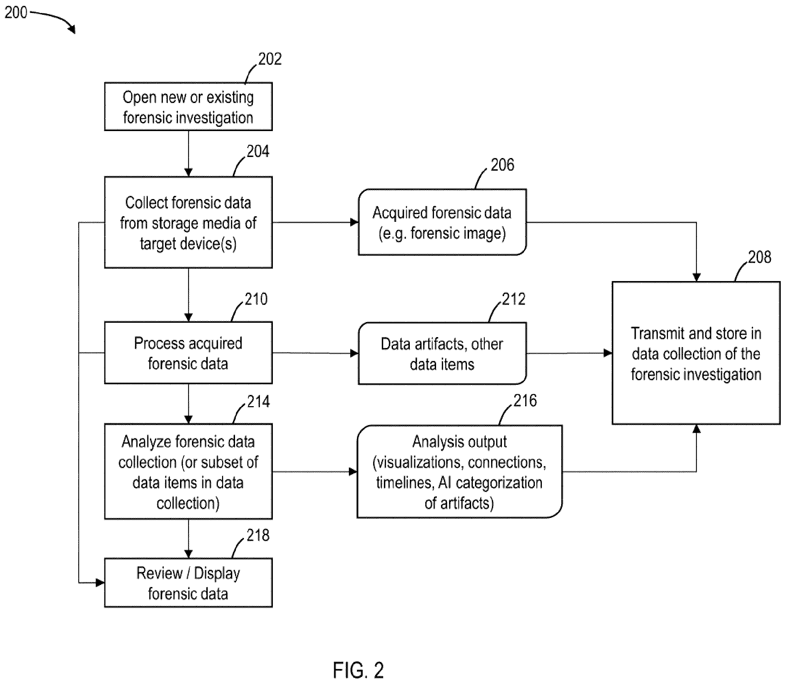

Referring now to Figure 2, shown therein is a high-level digital forensic investigation method 200 that may be performed by the system 100 of Figure 1, according to an embodiment.

At 202, a new or existing forensic investigation is opened.

The new or existing forensic investigation may be opened by inputting a forensic investigation identifier (or "case identifier") into a user interface provided by the control node 102 to the user device 104. The forensic investigation identifier may be a unique string of alphanumeric characters. The forensic investigation identifier may be stored by the control node 102 in local storage or in storage device 114 or 116 and used to retrieve and store various data related to the forensic investigation.

Generally, the forensic investigation identifier may be used to organize and relate various data generated by and stored in the system 100 that is part of the same forensic investigation or case. For example, multiple evidence sources or devices from which forensic data is acquired or extracted can be linked to a single forensic investigation in the system 100 by linking an evidence source or device identifier to the forensic investigation identifier.

The control node 102 may generate a forensic investigation dashboard user interface in response to receiving the forensic investigation identifier. In some cases, the forensic investigation dashboard user interface may retrieve data related to the forensic investigation using the forensic investigation identifier, for example from storage device 114 or 116, and display the retrieved data in the user interface. In the case of an existing forensic investigation, retrieved data may include, for example, data generated by the previous performance of some of all of method 200.

At 204, forensic data is collected from storage media of a target device 120.

The forensic data may be collected by the control node 102 commanding a processing node 110, 112 to acquire forensic data from the target endpoint device 120 using a forensic data acquisition software application installed on the processing node 110, 112. In doing so, processing node 110, 112 generates a data output 206 comprising acquired forensic data.

The acquired forensic data 206 may be, for example, a forensic image of a drive (or portion of a drive) of the target endpoint device 120. Generally, as used herein, the term "forensic image" refers to a copy of unaltered electronic information.

In some cases, collecting forensic data at 204 may include the processing node 110, 112 doing a low-level block-based copy from a target device storage media, to retrieve all data on the device, regardless of whether attempts have been made to delete the data. In other cases, the processing node 110, 112 may simply copy files and folders using operating system-level file copy facilities. Other data retrieval techniques may also be used, as will be known. Specific techniques for forensic data retrieval from a target device will be known.

Endpoints from which forensic data is collected at 204 may include mobile devices, non-mobile computing devices, remote computing devices, and cloud data sources.

At 208, the acquired forensic data 206 is transmitted to a data storage device such as device 114 or 116, where it is stored as a data collection of the forensic investigation. In particular, the acquired forensic data 206 may be linked to a device identifier which uniquely identifies the target device 120 from which the acquired forensic data 204 was collected. The acquired forensic data 206 may also be linked to the forensic investigation identifier.

At 210, the acquired forensic data 206 is processed to identify and extract forensically relevant data items 212. The forensic data 206 may be processed by the control node 102 commanding a processing node 110, 112 to retrieve the acquire forensic data 206 from data storage 114, 116 and process the acquired forensic data 206 using a forensic data recovery/extraction software application installed on the processing node 110, 112. In doing so, processing node 110, 112 generates a data output 212 comprising a plurality of data items including data artifacts.

Forensically relevant data items 212 are data items of interest to the forensic investigation. Forensically relevant data items 212 include data artifacts.

Generally, data items 212 can represent any data that can be retrieved from target device storage media, such as files, databases, folders, block data or byte ranges, volume information, file images, and the like.

On their own, data items 212 generally can be viewed using a text preview, which converts the raw data into a text representation (e.g., using ASCII or UTF encoding), or in a binary or hexadecimal representation. Reviewing large amounts of data items in this format can, however, be time-consuming and difficult. Therefore, a forensic data extraction application may generate a plurality of data artifacts.

Data artifacts are a type of data item that represents one or more other data items in a structured way. A simple form of data artifact can be created or "refined" based on the filename extension of a data item retrieved from the target device. For example, the computing device may generate a data artifact of type "documents" for a data item with a file extension of .DOCX. However, more advanced data artifacts can also be generated through the use of one or more refining modules. For example, the computing device may search for data patterns indicative of particular file types, such as media files, to generate media data artifacts or text data artifacts, respectively. Such generation of data artifacts can occur regardless of whether attempts have been made to obfuscate the nature of a particular file, for example, by changing a file extension or even deleting a file (where the underlying raw data can be recovered from unused space on the target device storage media).

Refining modules can be provided or defined for a wide variety of data artifacts. Some refining modules can be pre-programmed or pre-configured with the forensic data investigation software application. Refining modules may also be configurable by an end user (for example via user device 104).

Some types of data items 212 may be used to generate more than one data artifact. For example, an e-mail database may be used to generate a large number of data artifacts corresponding to individual e-mail messages.

Data items 212, including data artifacts, may be stored in a data collection once generated (i.e. at 208). The data collection can be an electronic database file stored in a data storage device, such as devices 114, 116. The electronic database file may be a relational database, such as MICROSOFT SQL SERVER^{™} or a non-relational database, such as a key-value database, NoSQL database, or the like. In some cases, a data collection may contain data items 212 retrieved from more than one target device and, because data artifacts are a type of data item, the data collection may also contain data artifacts generated by the computing device. Each data item in the data collection may be tagged with information to identify the target device that is the source of the data item. In some cases, a data collection may contain only records of data artifacts or data items, along with indications of where the source data can be retrieved (e.g., on the target device).

Example data artifacts include media-type data artifacts, chat-type data artifacts, web browser-type artifacts. Example data items include file type data items or folder type data items.

Data items 212, like other outputs 206, 216, can be annotated or tagged with labels or tags. One example of such a tag or label is a tag or label indicating the data item is sensitive data.

The recovered forensically relevant data items 212 are transmitted to a data storage device at 208, such as device 114 or 116, where they are stored in a data collection of the forensic investigation.

In particular, the recovered data items 212 may be linked to a device identifier which uniquely identifies the target device 120 from which the acquired forensic data 206 was collected and/or to a forensic image identifier which identifies the forensic image 206 from which the data items 212 were recovered. The data items 212 may also be linked to the forensic investigation identifier.

At 214, the forensic data collection, and in particular data items 212 generated at 210, is analyzed to generate one or more analysis outputs 216.

The data items 212 may be analyzed by the control node 102 commanding a processing node 110, 112 to retrieve the data items 212 from data storage 114, 116 and analyze the data items 212 using a forensic data analysis software tool installed on the processing node 110, 112.

In doing so, the processing node 110, 112 generates a data output 216 comprising an analytics output. The data output 216 includes a displayable format of the data output 216.

The data output 216 is transmitted to a data storage device at 208, such as device 114 or 116, where the data output 216 is stored.

The data output 216 may be transmitted to the control node 102, which may then generate a user interface for displaying the data output 216 and provide the user interface to the user device 104.

In an example, the forensic data analysis tool may be a "connections tool" configured to identify and visualize connections and relationships between data items 212. Connections and relationships may be identified and visualized across multiple evidence sources or devices. The identified and visualized connections and relationships may be embedded in a relation graph linking connected data items or pieces of information together. Generally, the connections tool may assist in piecing together how artifacts, people, and devices relate to each other in order to provide investigative insights. For example, the connections tool may generate a relation graph visualizing connections between data such that an investigator viewing the displayed data output 216 can see how a specific picture file got on a device, how the picture file was accessed, if the picture file was shared, and who the picture file was shared with.

In another example, the forensic data analysis tool may be a "timeline tool" configured to identify and visualize temporal relationships between data items 212 in a forensic investigation. The timeline tool may create a graphical visualization based on dates and timestamps available to be parsed out from forensic data. This may include timestamps reported by the file system and timestamps parsed from data artifacts. In an embodiment, the graphical visualization may include a graphical plot in which data points representing data artifacts are plotted on the Y-axis and time information (e.g. date/time) is plotted on the X-axis (e.g. in a case where there are multiple data artifacts for a given time point on the X-axis, the data points on the Y-axis may be stacked in height such that time points having more artifacts will be higher on the Y-axis, giving a potential indication of greater activity).

In another example, the forensic data analysis tool may be an artificial intelligence tool configured to perform text-based analysis or image classification on data artifacts 212. In particular, the artificial intelligence tool may be used to identify data artifacts having content of particular forensic interest. In the case of image classification, the data output may include, for example, a list of media files or images that identified by the image classification tool as including particular content (e.g. having a particular class label assigned to the image). In the case of text-based analysis, the data output 216 may include, for example, a list of data artifacts which the artificial intelligence tool has identified as including particular content. In one example, the artificial intelligence tool may use optical character recognition (OCR) to extract text from data artifacts.

At 218, forensic data generated by any of steps 204, 210, 214 of method 200 is displayed for review by a user at user device 104. This may include the control node 102 retrieving the data output 206, 212, 216 (or metadata associated therewith) from the data storage device 114, 116, generating a user interface for displaying the data output 206, 212, 216 in a human-readable format, and providing the user interface to the user device 104 for display. In some cases, display of the data output may be in response to a user input at the user device 104, such as by selecting an option to display a particular data output 206, 212, 216. In some cases, the data output 206, 212, 216 to be displayed may be sent from the processing node 110, 112 that generated the data output to the control node 102.

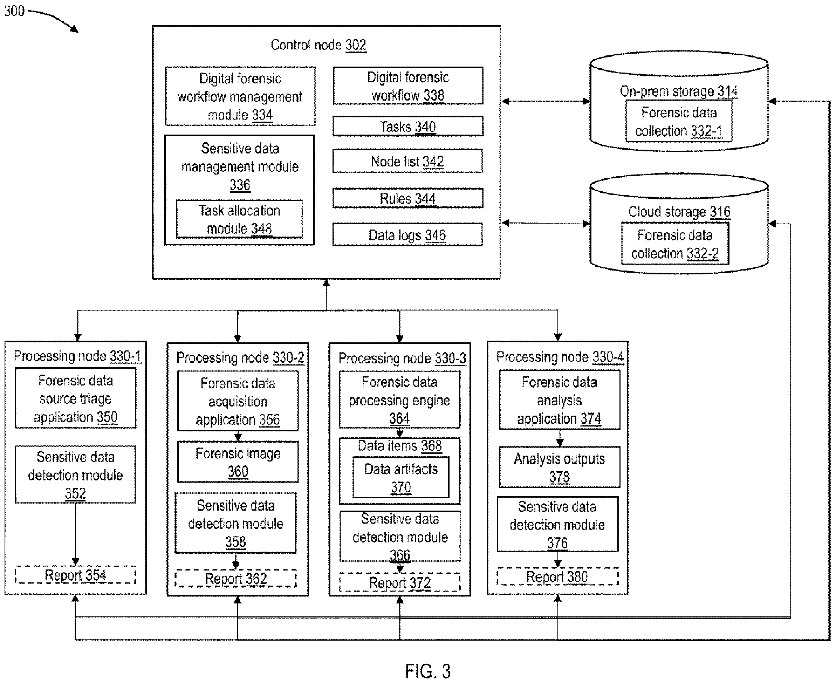

Referring now to Figure 3, shown therein is digital forensic investigation system 300, according to an embodiment.

System 300 may correspond to the system 100 of Figure 1. Components of system 300 may be analogous to components of system 100, with reference characters incremented by 200 (e.g., 102, 302). Description above in reference to system 100 may apply to system 300. System 300 may be used implement the method 200 of Figure 2 or aspects thereof. System 300 includes a control node 302. The control node 302 is operable to communicate with a plurality of processing nodes 330-1, 330-2, 330-3, 330-4 via a data communication network (such as network 20 in Figure 1).

The processing nodes 330-1, 330-2, 330-3, 330-4 may be collectively referred to as processing nodes 330 and generically as processing node 330. Each respective one of the processing nodes 330 may be an on-prem processing node, accessible to the control node 302 through an on-prem network, or a cloud processing node, accessible to the control node 302 through a cloud network, depending on the context (i.e. based on decisions made by the control node 302 as described further below). As such, processing nodes 330 may correspond to processing nodes 110 or 112 of Figure 1.

Control node 302 and processing nodes 330 are operable to communicate with on-prem storage 314 and cloud storage 316 via a data communication network. The on-prem storage 314 and cloud storage 316 are each configured to store one or more forensic data collections 332-1, 332-2 (referred to collectively as forensic data collections 332 and generically as forensic data collection 332), such as described at 208 of Figure 2. In some cases, a portion of a data collection 332 may be stored in on-prem storage 314 while another portion of the data collection 332 may be stored in cloud storage 316.

Each forensic data collection 332 may be linked to or otherwise associated with an electronic/digital representation of a forensic investigation (or case). At its most basic, a forensic investigation in the system 300 may include a forensic investigation identifier, which is a unique identifier identifying the forensic investigation, and a plurality of data stored in association with the identifier. Data stored in association with the investigation identifier may include forensic data, such as forensic data collections 332, and non-forensic data. Generally, forensic data includes data derived from electronically-stored information stored on a target device (such as acquired data, processed acquired data, analyzed processed data, and reported or visualized analyzed data) and non-forensic data includes data that is not forensic data, such as descriptive data about the forensic investigation (e.g. a case type identifier, such as "fraud case") and data regarding who can access the forensic investigation.

A forensic investigation may include a plurality of data collections 332. In some cases, the data collection 332 may include subcollections. For example, a data collection 332 for a forensic investigation may include a first subcollection for a first evidence source and a second subcollection for a second evidence source.

The control node 302 includes a digital forensic workflow management module 334 and a sensitive data management module 336. In some cases, the sensitive data management module 336 may be a component of the workflow management module 334. The digital forensic workflow management module 334 loads a digital forensic workflow 338 for execution by the system 300. In some cases, the workflow management module 334 may be configured to generate the workflow 338 in response to user input provided at a user device connected to the control node 302, such as described herein.

Tasks 340 may be generated from the digital forensic workflow 338 by the workflow management module 334. Generally, a task 340 corresponds to a portion of the workflow 338. The task 340 may specify a processing task to be performed, the data to be operated on, an application or program for performing the processing task, and a storage location for an output generated by performance of the processing task. A task 340 may also be referred to as a portion of the workflow 338 or a portion of distributed digital forensic processing.

The control node 302 stores and maintains a node list 342. The node list 342 specifies available nodes for use by the control node 302. The nodes include at least one on-prem node and at least one cloud node. The node list 342 may include processing nodes and storage nodes. For example, in system 300, the node list 342 includes processing nodes 330-1, 330-2, 330-3, and 330-4, and storage nodes at which on prem-storage 314 and cloud storage 316 are located. The node list 342 includes information for each node in the node list 342, such as a network address and a node identifier. For each node, the node list 342 also includes information sufficient for the control node 302, and more specifically the sensitive data management module 336, to identify whether the respective node is an on-prem node or a cloud-based node. For example, in an embodiment, the node identifier may specify whether the node is on-prem or cloud-based. Generally, the node list 342 defines the nodes that are available or may be available for the processing and storage of forensic data by the system 300.

The sensitive data management module 336 is configured to manage where sensitive data (as defined in the system 300) is processed and stored in the system 300. That is, the sensitive data management module 336 implements measures to limit known sensitive forensic data to being processed and stored by on-prem nodes. Known sensitive forensic data is forensic data (e.g. data items, artifacts, analysis outputs) that has been identified or detected by a processing node 330 in the performance of a processing task allocated by the control node 302 and tagged as sensitive such that its status as sensitive in the system 300 is known (in particular, by control node 302). As described herein, tagging may be performed at the data item level or at a higher level, such as at the level of the data collection which includes the sensitive data item or the forensic investigation level which includes the data collection that includes the sensitive data item.

The control node 302 (sensitive data management module 336) maintains and stores one or more data logs 346. Data logs 346 may include a data storage log providing information on where forensic data is stored (e.g. at on-prem storage 314 or cloud storage 316). For example, data logs 346 may include a data storage log indicating that forensic data collection 332-1 is stored in on-prem storage 314 and forensic data collection 332-2 is stored in cloud storage 316. The data logs 346 may also include a sensitive data log. The sensitive data log may specify instances of sensitive data items that have been detected and identified as sensitive. The sensitive data log may include a list of forensic investigations that have been tagged as sensitive or a list of forensic data collections that have been tagged as sensitive. In such cases, the sensitive data log may act as a sort of "blacklist" that can be referenced when allocating tasks to determine which forensic investigations or data collections have been tagged as sensitive.

The control node 302 stores task allocation rules 344. The task allocation rules 344 include at least a first set of rules for processing and storage task allocation for use where sensitive data is not known to be present and a second set of rules for processing and storage task allocation for use when sensitive data is known to be present. In some cases, the rules 344 may be configurable by a user via a user interface at a user device in communication with the control node 302 (such as user device 104). In some cases, the rules 344 may be included or embedded in the digital forensic workflow 338.

The sensitive data management module 336 includes a task allocation module 346 configured to determine which processing node 330 to allocate a given task 340 to and at which storage location 314, 316 to store the output of the processing task 340. The task allocation module 346 may determine which set of rules 344 to apply based on whether input data to be operated on is tagged as sensitive, such as by referencing the data logs 346.The task allocation module 346 may select a node from the node list 342 according to the rules 344. The task 340 may then be communicated from the control node 302 to the selected processing node 330.

As noted, each task 340 may specify input data to be operated on in performance of the task 340. The task allocation module 346 may be configured to determine whether the specified input data to be operated on in performance of the task 340 is tagged or otherwise marked as sensitive. This may include communicating with on-prem storage 314 or cloud storage 316, for example to retrieve database information regarding the input data, or may include referencing a sensitive data log 346 stored and maintained by the control node 302 which records instances of sensitive data (e.g. as a type of blacklist).

In a first example, the digital forensic workflow 338 may include a forensic data source triage task 340. Triaging of a data source may be performed at the outset of a forensic investigation as a preliminary measure to determine whether a data source (i.e. a device, such as a mobile phone, that stores electronic information) contains or is likely to contain sensitive data. The output of the triage task can be used to prioritize or deprioritize further processing tasks related to data stored in the data source (e.g. acquiring a forensic image of the device and extracting artifacts).

The data source triage task may specify the processing task to be performed, the data source (i.e. the input data to be operated on), a forensic data source triage application for performing the processing task, and a storage location for an output of the triage task.

The control node 302 uses the task allocation module 348 to determine, based on rules 344, to allocate the data source triage task to processing node 330-1. In some cases, the control node 302 may check to see if the forensic investigation for which the triaging task is being performed is sensitive, such as by reference to a forensic investigation identifier or other metadata.

Processing node 330-1 includes a forensic data source triage application 350 and a sensitive data detection module 352. The sensitive data detection module 352 may be a component of the triage application 350. The forensic data source triage application 350 may be deployed by the control node 302 to the processing node 330-1. The triage application 350 may be deployed by the control node 302 to the processing node 330-1 at the time of allocating the task to the processing node 330-1. The triage application 350 may be configured to perform a sort of "quick scan" for contraband content and applications, for example, that is a less in depth investigative search. In a particular example, the triage application 350 may scan file names on a target device for potential dark web, P2P, cloud storage, encryption, anti-forensics, gaming, messaging, virtual machine, VPN, and cryptocurrency apps and files. The triaging application 350 may also be configured to scan file names for keyword matches using keyword and regex keyword lists.

The processing node 330-1 performs the data source triage task using the forensic data source triage application 350 and generates an output. The output may then be provided to the sensitive data detection module 352, which determines whether sensitive data was detected. If sensitive data was detected, the sensitive data module 352 generates a report 354 indicating that sensitive data was detected when performing the triage task. The report 352 may include identifying information of the data source on which the triage task was performed. In some cases, a report 354 may also be generated if sensitive data was not detected. The processing node 330-1 sends the report 354 to the control node 302.

Upon receiving a report 352 indicating sensitive data was identified by processing node 330-1, the sensitive data management module 336 of the control node 302 may record in a data log 346 that the data source processed by processing node 330-1 includes sensitive data. This may include, for example, tagging the data source identifier with a "sensitive" tag. The output may be stored in on-prem or cloud storage 314, 316 based on instruction from the cloud node 302.

In a second example, the digital forensic workflow 338 may include a forensic data acquisition task 340. The acquisition task includes generating a forensic image of a storage drive on a target device that is part of the forensic investigation. The forensic data acquisition task may specify the processing task to be performed (i.e. acquiring a forensic image of a specified device), the input data to be operated on (i.e. the source data from which the image is to be generated), a forensic data acquisition application 356 (e.g. an FTK imager or other forensic imaging application) for performing the acquisition task, and a storage location for an output of the acquisition task (i.e. forensic image).

The control node 302 uses the task allocation module 348 to determine, based on rules 344, to allocate the forensic data acquisition task to processing node 330-2. Processing node 330-2 includes a forensic data acquisition application 356 and a sensitive data detection module 358. The forensic data acquisition application 356 may be deployed by the control node 302 to the processing node 330-2. The acquisition application 356 may be deployed by the control node 302 to the processing node 330-2 at the time of allocating the task to the processing node 330-2.

The processing node 330-2 performs the data acquisition task using the forensic data acquisition application 356 and generates an output. The output includes a forensic image 360. The forensic image 360 may then be provided to the sensitive data detection module 352, which determines whether the forensic image 360 includes sensitive data. If sensitive data is detected, the sensitive data module 358 generates a report 362 indicating that sensitive data was detected. The report 362 may include identifying information of the data source (e.g. the forensic image, the target device, the drive on the target device) on which the acquisition task was performed. In some cases, a report 362 may also be generated if sensitive data was not detected.

In an embodiment, the acquisition application 356 may perform a remote acquisition to an on or off network device. The processing node 330-2 may deploy an acquisition agent to the target device. The agent is an executable file. The agent may be configured to persist on the endpoint. The forensic image 360 may be stored in on-prem storage 314 or cloud storage 316 based on instruction from the control node 302.

In a third example, the digital forensic workflow 338 may include a forensic data extraction task 340. The extraction task includes extracting data items, including data artifacts, from the forensic image 360 generated by processing node 330-2. The forensic data extraction task may specify the processing task to be performed (e.g. types of data items or artifacts to be extracted), the input data to be operated on (i.e. the forensic image 360), a forensic data extraction application (forensic data processing engine 364) for performing the extraction task, and a storage location for an output of the extraction task (e.g. a collection of data items extracted from the forensic image 360).

The control node 302 uses the task allocation module 348 to determine, based on rules 344, to allocate the forensic data extraction task to processing node 330-3. Processing node 330-3 includes a forensic data extraction application (forensic data processing engine 364) and a sensitive data detection module 366. The forensic data processing engine 364 may be deployed by the control node 302 to the processing node 330-3. The processing engine 364 application 356 may be deployed by the control node 302 to the processing node 330-3 at the time of allocating the task to the processing node 330-3.

The forensic data processing engine 364 includes one or more refining modules for generating specific categories of data artifacts. A refining module may be configured to load an artifact definition defining one or more artifact types to be scanned for. Artifact definitions may be stored in the form of a structured data definition, such as an extensible markup language (XML) file, a JavaScript Object Notation (JSON) file, or other suitable format or file. Artifact definitions may be user configurable. Artifact definitions may include two primary types: database-type artifact definitions and fragment-type artifact definitions. Each artifact definition defines at least one pattern to be matched in the acquired data to identify candidate artifacts. Database-type artifact definitions may be created to search within existing databases and, as such, may contain primarily parsing patterns as described herein. In contrast, fragment-type artifact definitions may be created to search any type of data, whether structured or unstructured and, as such, generally contain carving patterns as described herein. Both types of artifact definition can contain a source definition. The processing node 330-3 performs the data extraction task using the forensic data processing engine 364 and generates an output.

The output includes data items 368, including data artifacts 370, extracted from the forensic image 360. The data items 360 may then be provided to the sensitive data detection module 368, which determines whether the data items 368 includes sensitive data. If sensitive data is detected, the sensitive data module 366 generates a report 372 indicating that sensitive data was detected. The report 362 may include identifying information of the sensitive data item. This may include metadata of the data item, and may also include metadata of the forensic image 360, the target device, or the target device data source from which the data item was collected. In some cases, a report 372 may also be generated if sensitive data was not detected.

In a fourth example, the digital forensic workflow 338 may include a forensic data analysis task 340. The analysis task includes analyzing forensic data related to the forensic investigation, such as data items 368, to gather further insights.

The forensic data analysis task may specify the processing task to be performed (e.g. type of analysis to be performed), the input data to be operated on (e.g. data artifacts 370, or a subset of data artifacts 370), a forensic data analysis application for performing the analysis task, and a storage location for an output of the analysis task (e.g. an analysis or analytics output).

The control node 302 uses the task allocation module 348 to determine, based on rules 344, to allocate the forensic data analysis task to processing node 330-4.

Processing node 330-4 includes a forensic data analysis application 374 and a sensitive data detection module 376. The forensic data analysis application 374 may be deployed by the control node 302 to the processing node 330-4. The analysis application 374 may be deployed by the control node 302 to the processing node 330-4 at the time of allocating the task to the processing node 330-4.

The processing node 330-4 performs the data analysis task using the forensic data analysis application 374 and generates an output 378. Depending on the analysis application, the analysis output 378 may vary. For example, the analysis output 378 may include a timeline visualization, a visualization of connections and relationships between data items, or an Al output. The analysis output 378 may then be provided to the sensitive data detection module 376, which determines whether the analysis output 378 includes sensitive data. If sensitive data is detected, the sensitive data module 376 generates a report 380 indicating that sensitive data was detected. The report 380 may include identifying information of the sensitive data item. This may include metadata of the data item, and may also include metadata of the forensic image, the target device, or the target device data source from which the data item was collected. In some cases, a report 380 may also be generated if sensitive data was not detected.

In some cases, analysis output 378 may be displayed in a user interface at a user device (e.g. 104). The user interface may be configured to receive an indication from a user that particular displayed data item in the analysis output 378 is sensitive. For example, the user interface may include a selectable user interface element that, when selected by the user, tags the particular data item as sensitive. Similar "manual tagging" of sensitive data by the user may be provided when displaying data outputs from other forensic data processing (e.g. forensic image 360 data items 368). The manual tagging feature may provide an additional mechanism by which sensitive data not detected by the sensitive data detection module can be identified and tagged.

Generally, the processing outputs, such as forensic image 360, data items 368, and analysis outputs 378, are stored in either on-prem storage 314 or cloud storage 316 according to an instruction provided by the control node 302 to the processing node 330. In some cases, the storage location instruction may be provided with the task 340. In some cases, the storage location instruction may be provided in response to a received report 354, 362, 372, 380. For example, if any one of reports 354, 362, 372, 380 indicate that sensitive data has been detected, the control node 302 may respond by sending an instruction to the processing node 330 to store the processing output in on-prem storage 314 as part of forensic data collection 332-1. In some cases, the control node 302 may also respond with an instruction to the processing node 330 to encrypt the processing output (or sensitive portion thereof) and delete any instances that may have been stored in cloud storage 332-2.

In some embodiments, where the control node 302 receives a report 354, 362, 372, 380 that indicates sensitive data has been detected, the control node 302 may use sensitive data management module 336 to record information about the sensitive data in a data log 346. Information about the sensitive data may include identifying data of a particular data item. Information about the sensitive data may include specifying what data collection 332 the sensitive data is part of, or what forensic investigation the sensitive is linked to. The sensitive data management module 336 may reference the data log 346 at a later time when determining whether to limit processing and storage to on-prem nodes.

In some embodiments, the system 300 may be configured via the rules 344 and control node 302 application of the rules 344 automatically perform processing tasks 340 using only on-prem processing nodes and store forensic data only at on-prem storage nodes until a certain stage. For example, until a sensitive data detection has been performed on a processing output and there is no sensitive data detected.

Sensitive data detection modules 352, 358, 366, 376, and more generally any sensitive data detection operation described herein, may use any suitable technique for detecting specific types of data in forensic data. In variations, a sensitive data detection module may use any one or more of keyword searching (e.g. based on a list of keywords), file path/location searching, hash set comparison, Al model detection. In the case of Al model detection, an Al model may be configured to receive image data as input and generate an output indicating whether the image data includes an object of a particular class or type (e.g. nudity, weapon). Specific techniques for detecting and identifying specific types of content in forensic data collections will be known.

In an example, a sensitive data detection module may be configured to use one or more artificial intelligence or machine learning algorithms to identify sensitive data in a data output of an allocated forensic data processing task by matching to one or more sensitive images or patterns. The sensitive data detection module may use an artificial intelligence or machine learning model to identify a particular class or type of sensitive data (e.g., from among a plurality of classes or types). A sensitive data detection module may include one or more neural networks configured to receive input data and generate at least one output. The neural network may be a feed-forward neural network. The neural network may have a plurality of processing nodes. The processing nodes may include a multi-variable input layer having a plurality of input nodes, at least one hidden layer of nodes, and an output layer having at least one output node. During operation of the neural network, each of the nodes in the hidden layer applies an activation/transfer function and a weight to any input arriving at that node (from the input layer or from another layer of the hidden layer). The node may provide an output to other nodes (of a subsequent hidden layer or to the output layer). The neural network may be configured to perform a regression analysis providing a continuous output, or a classification analysis to classify data. The neural networks may be trained using supervised or unsupervised learning techniques, as described below. According to a supervised learning technique, a training dataset is provided at the input layer in conjunction with a set of known output values at the output layer. During a training stage, the neural network may process the training dataset. It is intended that the neural network learn how to provide an output for new input data by generalizing the information it learns in the training stage from the training data. Training may be effected by back propagating the error to determine weights of the nodes of the hidden layers to minimize the error. Once trained, or optionally during training, test or verification data can be provided to the neural network to provide an output. A neural network may thus cross-correlate inputs provided to the input layer to provide at least one output at the output layer. The output provided by a neural network in each embodiment is preferably close to a desired output for a given input, such that the neural network satisfactorily processes the input data.

In another example, a sensitive data detection module may include a keyword searching module for detecting data items considered "sensitive" by the user. The keyword searching module may search a forensic data input, such as forensic image 360, by scanning the forensic image 360 based on a keyword list for common words in sensitive data (e.g. CSAM) file names. The keyword list may be a .txt file containing a plurality of keywords (e.g. one keyword per line). The keyword list may be user customizable.

In another example, a sensitive data detection module may include a hash comparison module for detecting sensitive content. The hash comparison module is configured to hash data items being processed and compare the resulting hashes to a set of reference hashes. The references hashes correspond to known sensitive data items. If, when comparing the generated hashes to the reference hash set a match is identified, the matching data item is tagged as sensitive. In a particular example, a sensitive data item that is an image (e.g. any type of image file) may be hashed using a hashing algorithm such as an MD5 or SHA (e.g. SHA-256) hashing algorithm and the hash of the image compared to a set of one or more reference hashes of "bad images" to determine whether the image matches an image that has previously been identified as "bad" or "sensitive". Such an approach may be applied to other types of data items and files beyond images.

Generally, the detection capabilities of the sensitive data detection module may differ depending on the stage of the digital forensic workflow or how "deep" the level of analysis of forensic data is. For example, in Figure 3, the level of analysis of forensic data performed may be, from least thorough to most thorough: forensic data source triage application 350, forensic data acquisition application 356, forensic data processing engine 364, forensic data analysis application 374. As a result, the detection capabilities of the respective sensitive data detection modules may be commensurate with the relative level of depth of forensic analysis carried out by the respective application. For example, the sensitive data detection module 352 may use techniques that are relatively fast and computationally inexpensive, while the sensitive data detection module 358 may use more complex detection such as hash comparison (comparing a hash of a data item to a reference hash) and the sensitive data detection module 376 may use more computationally expensive detection techniques such as Al or ML-based models.

In some cases, the sensitive data detection module may be configured to classify or categorize sensitive data. For example, sensitive data may be categorized in levels, such as 1-4, where a higher level indicates material that is more sensitive. Lower levels may cover instances of data items in which indicators of potentially sensitive material were detected that put the data item at high risk of being sensitive (or being part of a forensic investigation in which other forensic data is being processed that may be sensitive). Accordingly, the output generated by the sensitive detection module (e.g. report) may indicate a sensitivity level or categorization/classification of the sensitive data that was detected. In some cases, the rules 344 for node allocation may include different sets of rules for different sensitivity levels/classes of sensitive data.

An example will now be described. If sensitive data detection module 358 does not detect sensitive data in the forensic image 360, or if no sensitive data detection is performed by processing node 330-2, the forensic image 360 may then be stored in either on-prem storage 314 or cloud storage 316 as part of data collection 332-1 or 332-2, respectively, depending on the control node 302 instruction. Simply, at this stage the processing and storage of forensic data is not limited to on-prem nodes because no sensitive data is known to be present.

The control node 302 may then generate a subsequent task form digital forensic workflow 338 using module 334 that specifies that forensic image 360 is to be processed by processing engine 364 to extract data items 368. The control node 302 may then determine whether forensic image 360 is tagged as sensitive, either through reference to data logs 346 or by communicating with on-prem or cloud storage 314, 316. As noted, the forensic image 360 in this example is not tagged as sensitive and thus the task allocation module 348 determines the forensic image 360 is not tagged as sensitive (e.g. through reference to data logs 346 or by communicating with storage 314 or 316) and applies a set of rules 344 for allocating tasks 340 when the input data is not tagged sensitive. The task is then allocated to processing node 330-3, and the task is performed, generating data items 368. In this example, the data items include a sensitive data item detected by module 366 and a report 372 indicating same is sent to control node 302. The sensitive data module 336 at control node 302 selects an available on-prem storage node from node list 342, for example on-prem storage 314, and instructs the processing node 330-3 to store the data items 368 in data collection 332-1 at on-prem storage 314. If the forensic image 360 that was operated on was stored in cloud storage 316, or if the data items 368 were stored in a cloud location, the control node 302 may send the processing node 330-3 an instruction to initiate deletion of the forensic image 360 or data items 368 from the cloud storage 316. The processing node 330-3 may also, for example using sensitive data module 366, automatically encrypt the data items 368 prior to sending to on-prem storage 314.

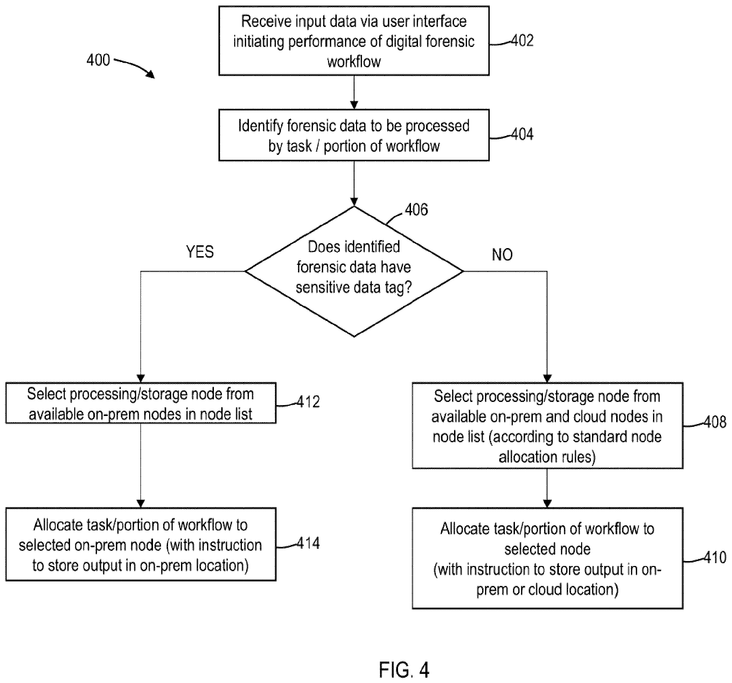

Referring now to Figure 4, shown therein is method 400 of allocating digital forensic workflow processing tasks to processing nodes, according to an embodiment. The method 400 is performed by a control node, such as control node 102 of Figure 1 or control node 302 of Figure 3. may be performed by the control node 102, 302 of Figure 1, 3. For example, aspects of the method 400 may be performed by the modules 334, 336 of Figure 3. At 402, the control node receives input data initiating performance of a digital forensic workflow 338 via a user interface. The user interface may be generated and displayed via a client application at a user device connected to the control node 302, such as user device 104 of Figure 1.

As previously described, the digital forensic workflow includes one or more tasks. At 404, the control node identifies forensic data to be processed by a particular task (portion of the digital forensic workflow). In an example, where the task is a forensic imaging task, the "forensic data to be processed" may be the data source or device from which the image is to be generated. In another example, where the task is a forensic data extraction task, the "forensic data to be processed" may be a forensic image.

At 406, the control node determines whether the identified forensic data has a sensitive data tag. In a case where the identified forensic data is a data source on a target device, the control node may use a device identifier associated with the device and determine whether the device identifier has a sensitive data tag associated therewith or linked thereto. In a case where the identified forensic data is a forensic data collection, or a subset of a forensic data collection, the control node may determine using a data collection identifier whether the data collection has been tagged as sensitive (such as by determining whether the data collection identifier is associated with or linked to a sensitive data tag).

In some cases, sensitive data may be identified at the forensic investigation level (or case level). This may include tagging a forensic investigation (represented by a forensic investigation identifier in the control node and system) to which the sensitive data items are linked as sensitive. Accordingly, in some embodiments, the control node may at 406 determine whether the forensic investigation has been tagged as sensitive, such as by using the forensic investigation identifier. Such an approach may ensure that all forensic data related to the investigation, including prospective forensic data (i.e. forensic data not yet generated), is treated as sensitive.

If, at 406, the identified forensic data for processing does not have a sensitive data tag, at 408, the control node selects a processing node and storage location from available on-prem and cloud nodes in a node list accessible to the control node (e.g. node list 342). The selection by the control node may be made according to a first set of rules. The first set of rules may be considered "standard rules" for task-node allocation that are used when sensitive data is not known to be present. The first set of rules may be based on factors such as resource availability and efficiency. In some cases, the first set of rules may include reference to a size threshold. In one example, the rules may be configured such that if the size of the data to be processed is below a certain size threshold (e.g. 50 GB), the processing task may be automatically allocated to an on-prem processing node. In another example, the rules may be configured such that the size of the data to be processed may be automatically compared to available space on an on-prem processing node and, if the size of the data to be processed is greater than the available space on the on-prem node (or above a size threshold), the processing task may be automatically allocated to a cloud processing node. In some other cases, the first set of rules may be configured such that copies of data are kept in both on-prem and cloud storage nodes if no sensitive data is detected. Such an approach may advantageously provide redundancy or the opportunity to have the data local for a period of time.

At 410, the control node allocates the processing task to the selected processing node. The task includes an instruction to store an output of the processing task in an on-prem or cloud location. If, at 406, the identified forensic data for processing does have a sensitive data tag, at 412, the control node selects a processing node and storage location from available on-prem nodes in the node list. At 414, the control node allocates the processing task to the selected on-prem node. The task includes an instruction to store an output of the processing task in an on-prem location.

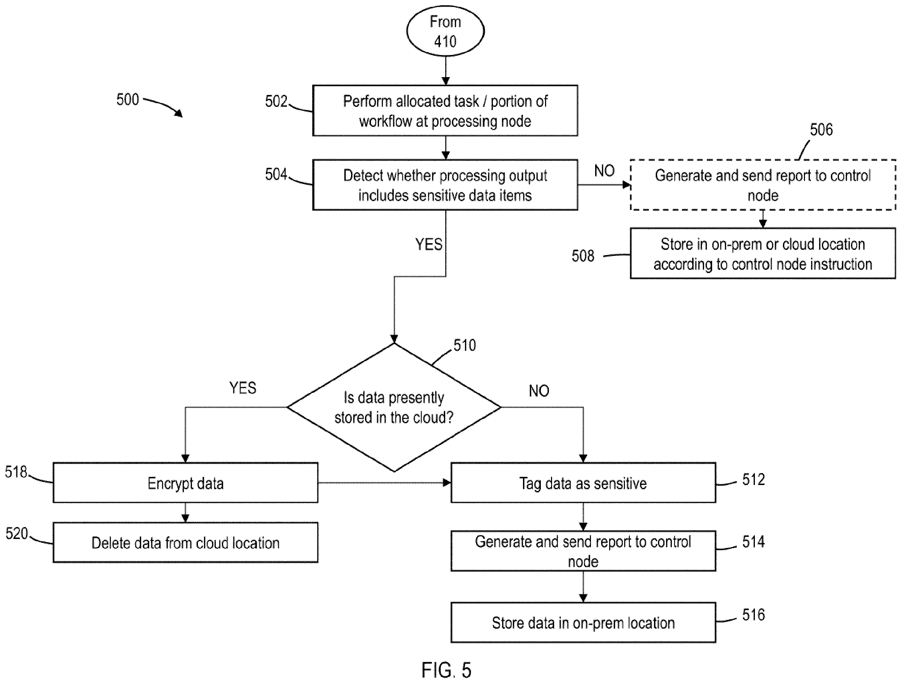

Referring now to Figure 5, shown therein is a method 500 of performing a distributed digital forensic workflow processing task, according to an embodiment. The method 500 is performed by a processing node, such as processing nodes 110, 112 of Figure 1 or processing nodes 330 of Figure 3. The method 500 is initiated in response to performance of 410 of method 400 in which the digital forensic workflow processing task is allocated to the selected on-prem or cloud node.

At 502, the processing node performs the allocated digital forensic workflow processing task. Performance of the task generates a processing output. Examples of processing outputs include a forensic image and a collection of data items (e.g. data artifacts) extracted from a forensic image. At 504, the processing node detects whether the processing output generated at 502 includes sensitive data items.

If, at 504, no sensitive data items are detected, the processing node optionally generates and sends a report to the control node at 506 indicating no sensitive data items were detected. Sensitive data detection may be performed by a sensitive data detection module, such as modules 352, 362, 372, 389 of Figure 3. At 508, the processing node stores the processing output generated at 502 in an on-prem or cloud location according to an instruction from the control node. As previously noted, the instruction may have been provided at 410 of Figure 4 when the task was allocated by the control node to the processing node. In other cases, the control node instruction may be provided in response to the report sent at 506.

If, at 504, one or more sensitive data items are detected, the method 500 branches at 510 based on whether the processing output is presently stored in a cloud location. If the processing output is not presently stored in a cloud location, the processing node tags the data as sensitive at 512. At 514, the processing node generates and sends a report to the control node indicating that one or more sensitive data items were detected.

At 516, the processing output data is stored in an on-prem location/node. The processing node may store the processing output in an on-prem location automatically upon detecting the sensitive data item (e.g. the control node may have instructed the processing node in the received task to store the processing output at a particular on-prem location if sensitive data is detected) or may do so in response to an instruction from the control node sent in response to the report sent at 514 specifying an on-prem node at which to store the processing output.

Returning to 510, if the processing output is presently stored in a cloud location, the processing node automatically encrypts the processing output to obtain an encrypted processing output. Encrypting may include encrypting the sensitive data items themselves and/or encrypting a larger output that includes the sensitive data item (such as a collection of artifacts including a sensitive data artifact, or a forensic image including a sensitive data item).

The processing node tags the encrypted sensitive processing output as sensitive at 512, generates and sends a report to the control node at 514, and stores the encrypted processing output in an on-prem location.

At 520, after encrypting the processing output, the cloud-stored instance of the processing output is deleted from the cloud storage location. Depending on the configuration, the deletion may be initiated by the processing node or the control node.

The steps of 518 and 520, and the method 500 more generally, may be used to protect sensitive data that is already in the cloud such that it can be securely transferred to on-prem storage and to remove any remnants of the data from the cloud.

Method 500 may be invoked when processing of forensic data has not been limited to on-prem nodes as a means of protecting against the possibility of previously undiscovered sensitive forensic data being uncovered that has been unknowingly processed or stored in the cloud.

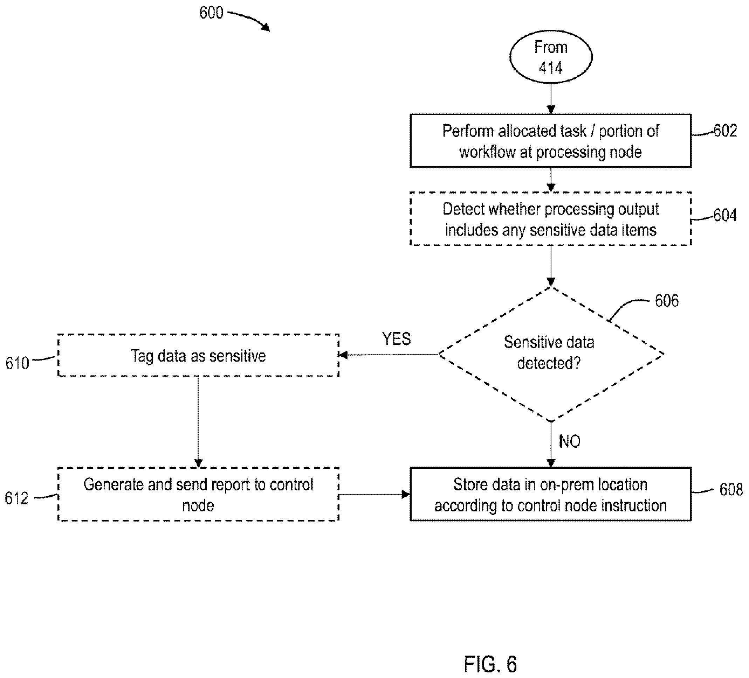

Referring now to Figure 6, shown therein is a method 600 of performing a distributed digital forensic workflow processing task, according to an embodiment.

The method 600 is performed by an on-prem processing node, such as processing nodes 110 of Figure 1 or processing nodes 330 of Figure 3. The method 600 is initiated in response to performance of 414 of method 400 in which the digital forensic workflow processing task is allocated to the selected on-prem. At 602, the on-prem processing node performs the allocated digital forensic workflow processing task. Performance of the task generates a processing output. Examples of processing outputs include a forensic image and a collection of data items (e.g. data artifacts) extracted from a forensic image.

At 604, the processing node detects whether the processing output generated at 602 includes sensitive data items. At 606, the method 600 branches based on whether sensitive data items were detected at 604.

If sensitive data items are not detected at 604, the processing output data is stored in an on-prem storage location according to a storage instruction received from the control node. The instruction to store the processing output may be included with the task when allocated to the processing node at 414.

If sensitive data items are detected at 604, the processing node tags the processing output data as sensitive at 610.

At 612, the processing node generates and sends a report to the control node indicating that one or more sensitive data items were identified at 604. The processing node then proceeds to store the processing output data, including the tagged data, in an on-prem storage location according to a storage instruction received from the control node.

In some embodiments, steps 604, 606, 610, and 612 may be optional or excluded. Such steps may be omitted, for example, when the forensic investigation linked to the digital forensic workflow being performed has already been tagged as including sensitive data or forensic data previously generated and stored for the forensic investigation has already been tagged as including sensitive data and such tagging causes the processing and storage to be limited to on-prem nodes anyway. While it may be advantageous to identify additional sensitive data and tag it as such in the system, the detection and tagging of such additional sensitive data items may not be necessary to limit future processing and storage of forensic data for the case to on-prem nodes (for example, by operation of Figure 4), and thus could be omitted to reduce processing requirements.

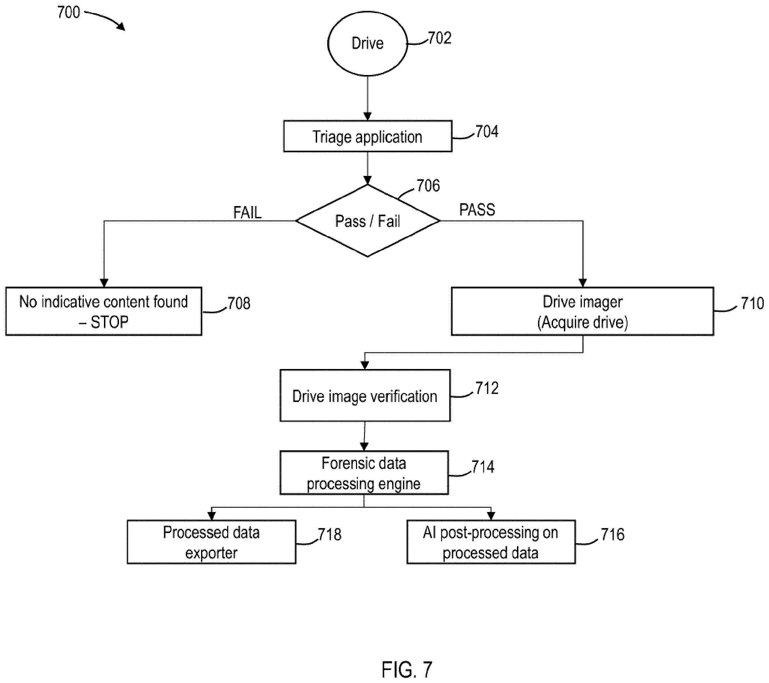

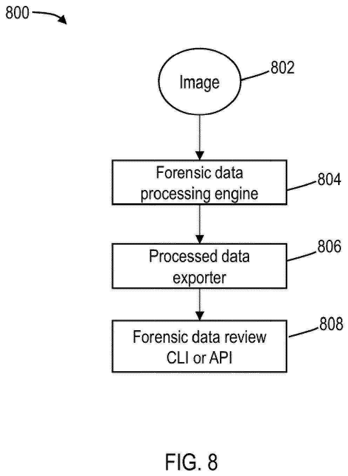

Referring now to Figures 7 and 8, shown therein are example digital forensic workflows 700, 800 that may be created and executed using distributed processing by the systems and methods of the present disclosure, according to embodiments.

For example, the workflows 700, 800 may be the digital forensic workflow 338 of Figure 3.

As described herein, workflows 700, 800 may be preconfigured digital forensic workflows. In some cases, workflows 700, 800 may be user created workflows created via user input provided to the control node via a user interface at a user device, such as a drag and drop interface. Once created, the workflows 700, 800 may be carried out automatically by the system without need for user input.

Referring to Figure 7, workflow 700 starts with drive 702. Drive 702 is a storage media, such as a hard drive, of a target device which is an evidence source of a forensic investigation.

Workflow 700 proceeds to triage application 704, which is a forensic data processing application. The triage application 704 may be the triage application 350 of Figure 3. As previously described, the triage application is configured to detect data of a particular type ("indicative content") in the drive 702 to facilitate triaging of target devices in the forensic investigation (i.e. identifying devices that include data of importance to the forensic investigation).

At 706, the workflow 700 includes a pass/fail stage based on an output of the triage application 704.

If data is not detected by the triage application 704, the result is a "fail" at 706 and the workflow 700 proceeds to stop at 708 on the basis that no indicative content was found by the triage application 704.

If indicative content is found by the triage application 704, the result is a "pass" at 706 and the workflow proceeds to acquire a forensic image of the drive 702 at 710 using a forensic imager application. The type of imager application may depend on the type of drive 702 (e.g. mobile device drive, desktop drive). In an embodiment, the drive imager may be an FTK imager and the output is an FTK image. Other types of images and imaging applications are contemplated. The forensic imaging application may be the forensic data acquisition application 356 of Figure 3.

At 712, the workflow 700 includes a drive image verification step in which the forensic image of drive 702 generated at 710 is verified using a forensic verification process executed by a verification application.

At 714, the workflow 700 continues to a forensic data processing stage in which the verified forensic image is processed via a forensic data processing engine. The forensic data processing engine may be the forensic data processing engine 364 of Figure 3. The forensic data processing engine is configured to extract data items, including data artifacts, from the forensic image of drive 702.

At 716, the workflow 700 includes artificial intelligence ("AI") post-processing of the output (or subset of the output) from 714 to generate additional insights. The Al post-processing is performed by an Al forensic data processing application and may include one or more Al models. The Al forensic data processing application may be the forensic data analysis application 374 of Figure 3.

At 718, the workflow 700 includes a processed data export step in which the data output generated at 714 (or a subset thereof) is exported by a processed data export application. The export application may generate exportable data that can be exported to a forensic data review application, which may enable collaborative review of forensic data generated by workflow 700 (and potentially other workflows associated with the forensic investigation).

Referring to Figure 8, workflow 800 starts with image 802, which is a forensic image acquired from a target device. Image 802 may be similar to the image generated by the drive imager 710 of workflow 700. The image may be, for example, an iOS image (e.g. GrayKey iOS image).

At 804, the workflow 800 includes a forensic data processing step at which the forensic image 802 is processed using a forensic data processing engine (like at 714 of workflow 700).

At 806, the workflow 800 includes a processed data export step (like 718 of workflow 700), which creates a data export of the processed forensic data from 804.

At 808, the workflow 800 includes a forensic data review CLI (command line interface) step at which the forensic data generated at 804 is pushed to a forensic data review application for review and further analysis by one or more users (e.g. in a distributed manner). In other embodiments, an application programming interface (API) may be used instead of a command line interface.

Generally, in workflows 700 and 800, processing tasks (such as tasks 340 of Figure 3) may be generated which correspond to steps or blocks of the workflow, such as blocks 704, 710, 712, 714, 716, 718, 804, 806, 808 which can be allocated to processing nodes (and storage of outputs allocated to nodes) according to allocation rules, such as rules 344 of Figure 3, as described herein. In some cases, multiple blocks of the workflow 700, 800 may be assembled into a single task or routine which includes the plurality of subtasks.

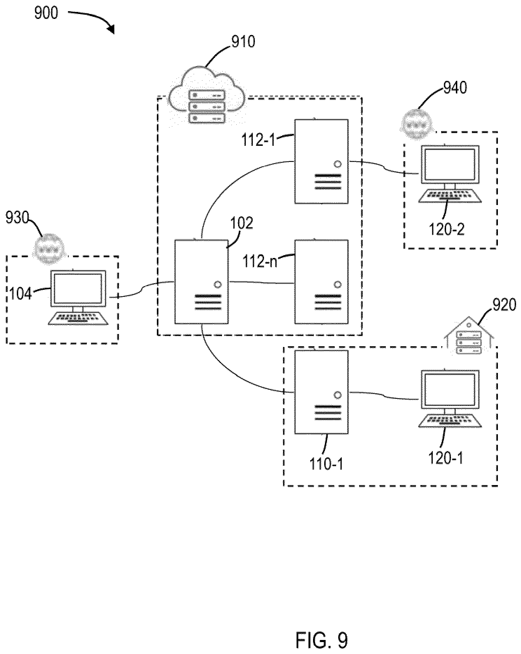

Referring now to Figure 9, shown therein is a schematic diagram of a digital forensic investigation system 900, according to an embodiment. The system 900 is an example implementation of the system 100 of Figure 1. System 900 includes cloud networked components 910 and on-prem networked components 920. The on-prem components 920 may be connected via a corporate network or the like. Cloud networked components 910 include control node 102 and cloud processing nodes 112-1, 112-n. On-prem networked components include on-prem processing node 110-1 and on-prem target endpoint device 120-1. The system 900 also includes user device 104 (which may also be administrator device 106). User device 104 includes a web browser for communicating with the control node 102 via an Internet connection 930. The web browser may be any suitable web browser, such as GOOGLE CHROME or the like. The system 900 further includes remote target endpoint device 120-2. Remote endpoint device 120-2 is accessible via Internet connection 940. Remote endpoint device 120-2 may be a cloud-based storage device.

In an example, a forensic investigator user may initiate a digital forensic workflow at user device 104. The control node 102 then conducts and manages performance of the workflow by allocating tasks to processing nodes 110-1, 112-1, 112-n. The workflow includes a first forensic data acquisition task related to acquiring forensic data from on-prem endpoint device 120-1 and a second forensic data acquisition task related to acquiring forensic data from remote endpoint device 120-2.

The control node 102 determines whether to apply a first set of rules for allocating tasks under non-sensitive data conditions (sensitive data not known or unlikely to be present) or a second set of rules for allocating tasks under sensitive data conditions (sensitive data known or likely to be present). The control node 102 determines the set of rules to apply and allocates the first forensic data acquisition task to on-prem processing node 110-1 and the second forensic data acquisition task to cloud processing node 112-1.

The on-prem processing node 110-1 executes a forensic data acquisition application and performs the acquisition task, acquiring forensic data from endpoint 120-1. The cloud processing node 112-1 executes a forensic data acquisition application and performs the acquisition task, acquiring forensic data from endpoint 120-2.

Acquired forensic data is then stored in a data storage device. Where the forensic data is stored in controlled by the control node 102. For example, control node 102 may instruct on-prem processing node 110-1 to store the forensic data acquired from endpoint 120-1 in an on-prem storage device on on-prem network 920 and may instruct cloud processing node 112-1 to store the forensic data acquired from endpoint 112-1 in a cloud storage device on cloud network 910. Whether the forensic data is stored in the cloud network 910 or on-prem network may be determined by the control node 102 based on whether the respective processing node 110-1, 112-1 detected sensitive data in the forensic data.

Configuration details for configuring the instances of the forensic data acquisition application may be provided by the user through user device 104 to the control node 102 and to the respective processing node.

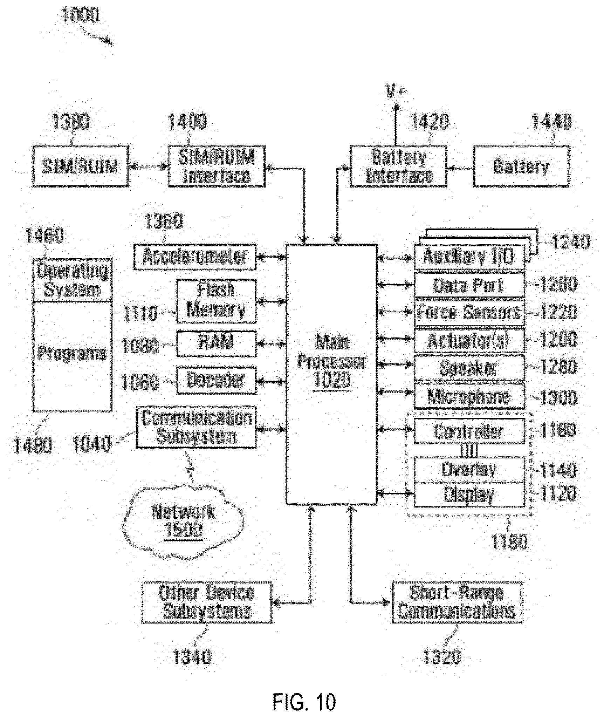

Referring now to Figure 10, shown therein simplified block diagram of components of a computing device 1000, according to an embodiment. The computing device 1000 is an example computing device that may be used in the computer systems described herein. Software modules described in the present disclosure herein may be configured to run on a computing device, such as device 1000. The device 1000 includes multiple components such as a processor 1020 that controls the operations of the device 1000. Communication functions, including data communications, voice communications, or both may be performed through a communication subsystem 1040. Data received by the device 1000 may be decompressed and decrypted by a decoder 1060. The communication subsystem 1040 may receive messages from and send messages to a wireless network 1500.

The wireless network 1500 may be any type of wireless network, including, but not limited to, data-centric wireless networks, voice-centric wireless networks, and dual-mode networks that support both voice and data communications.

The device 1000 may be a battery-powered device and as shown includes a battery interface 1420 for receiving one or more rechargeable batteries 1440.

The processor 1020 also interacts with additional subsystems such as a Random Access Memory (RAM) 1080, a flash memory 1100, a display 1120 (e.g. with a touch-sensitive overlay 1140 connected to an electronic controller 1160 that together comprise a touch-sensitive display 1180), an actuator assembly 1200, one or more optional force sensors 1220, an auxiliary input/output (I/O) subsystem 1240, a data port 1260, a speaker 1280, a microphone 1300, short-range communications systems 1320 and other device subsystems 1340.

In some embodiments, user-interaction with the graphical user interface may be performed through the touch-sensitive overlay 1140. The processor 1020 may interact with the touch-sensitive overlay 1140 via the electronic controller 1160. Information, such as text, characters, symbols, images, icons, and other items that may be displayed or rendered on a portable electronic device generated by the processor 1020 may be displayed on the touch-sensitive display 118. The processor 1020 may also interact with an accelerometer 1360 as shown in Figure 2. The accelerometer 1360 may be utilized for detecting direction of gravitational forces or gravity-induced reaction forces.

To identify a subscriber for network access according to the present embodiment, the device 1000 may use a Subscriber Identity Module or a Removable User Identity Module (SIM/RUIM) card 1380 inserted into a SIM/RUIM interface 1400 for communication with a network (such as the wireless network 1500). Alternatively, user identification information may be programmed into the flash memory 1100 or performed using other techniques.

The device 1000 also includes an operating system 1460 and software components 1480 that are executed by the processor 1020 and which may be stored in a persistent data storage device such as the flash memory 1100. Additional applications may be loaded onto the device 1000 through the wireless network 1500, the auxiliary I/O subsystem 1240, the data port 1260, the short-range communications subsystem 1320, or any other suitable device subsystem 1340.

For example, in use, a received signal such as a text message, an e-mail message, web page download, or other data may be processed by the communication subsystem 1040 and input to the processor 1020. The processor 1020 then processes the received signal for output to the display 1120 or alternatively to the auxiliary I/O subsystem 1240. A subscriber may also compose data items, such as e-mail messages, for example, which may be transmitted over the wireless network 1500 through the communication subsystem 1040.

For voice communications, the overall operation of the portable electronic device 1000 may be similar. The speaker 1280 may output audible information converted from electrical signals, and the microphone 1300 may convert audible information into electrical signals for processing.

While the above description provides examples of one or more apparatus, methods, or systems, it will be appreciated that other apparatus, methods, or systems may be within the scope of the claims as interpreted by one of skill in the art.

## Claims

1. A computer system for managing sensitive data items when performing a computer-implemented digital forensic workflow using on-premises ("on-prem") and cloud resources, the system comprising:
a control computing node configured to:
store the digital forensic workflow in a memory;
allocate forensic data processing tasks corresponding to portions of the digital forensic workflow to processing node computing devices ("processing nodes") for execution by the processing nodes, the processing nodes communicatively connected to the control computing node via at least one data communication network and including at least one cloud processing node and at least one on-premises ("on-prem") processing node;
wherein the control computing node automatically restricts allocation of a given forensic data processing task to the at least one on-prem processing node when forensic data to be operated on in performance of the given processing task is tagged as sensitive.

2. The computer system of claim 1, wherein the control computing node is further configured to:
allocate storage of data outputs generated by the performance of the allocated forensic data processing tasks by the processing nodes to data storage devices ("storage nodes"), each of the storage nodes communicatively connected to at least one of the control computing node and the processing nodes via the at least one data communication network, the storage nodes including at least one cloud storage node and at least one on-prem storage node;
wherein the control computing node automatically restricts the allocation of storage of a given data output to the at least one on-prem storage node when the data output is tagged as sensitive.

3. The system of claim 2, wherein allocating the given forensic data processing task includes instructing the processing node to execute the given forensic data processing task via a digital forensic software application and a sensitive data detection module installed on the processing node.

4. The system of claim 3, wherein the digital forensic software application and the sensitive data detection module are deployed to the processing node by the control computing node when allocating the given forensic data processing task.

5. The system of claim 3, wherein the digital forensic software application generates the given data output, and wherein the sensitive data detection module is configured to detect whether the given data output generated by the forensic software application includes sensitive data and tag the given data output as sensitive if sensitive data is detected.

6. The system of claim 5, wherein the sensitive data detection module is further configured to generate an output indicating that the given data output is sensitive for communication from the processing node to the control computing node, and wherein the control computing node restricts storage of the given data output to the at least one on-prem storage node based on the received output.

7. The system of claim 2, wherein the control computing node stores a list of available processing and storage nodes in the memory, the list of available nodes including a node identifier for each node in the list that identifies the node as on-prem or cloud, wherein the control computing node references the list of available nodes when allocating the forensic data processing tasks and the storage of data outputs, and wherein the control computing node is configured to select only from those nodes in the list of available nodes having a node identifier identifying the node as on-prem when (i) the forensic data to be operated on in performance of the given processing task is tagged as sensitive or (ii) when the data output generated in the performance of the given processing task is tagged as sensitive.

8. The system of claim 3, wherein the digital forensic software application is a forensic data acquisition application, and wherein the given data output is generated by the forensic data acquisition application and includes a forensic image of a data source.

9. The system of claim 3, wherein the digital forensic software application is a forensic data processing engine configured to extract forensic data artifacts from a forensic image, and wherein the given data output generated by the forensic processing engine includes a collection of forensic data artifacts.

10. The system of claim 3, wherein the digital forensic software application is one of a forensic data analysis application configured to identify relationships between forensic data artifacts and generate a visualization of the identified relationships or a forensic data source triage application configured to scan files names in the forensic data for keyword matches.

11. The system of claim 5, wherein the sensitive data detection module is configured to detect sensitive data in the given data output using keyword searching or file path/location searching or by hashing a data item in the given data output and determining whether the hash of the data item matches a reference hash.

12. The system of claim 5, wherein the sensitive data detection module is configured to use one or more artificial intelligence or machine learning algorithms to identify sensitive data in the given data output by matching to one or more sensitive images or patterns.

13. The system of claim 2, wherein the control computing node is configured to allocate forensic data processing tasks to processing nodes according to node allocation rules stored in the memory, the node allocation rules including at least a first set of rules and a second set of rules, wherein the control computing node is configured to apply the second set of rules when the forensic data to be operated on is tagged as sensitive.

14. A computer-implemented method of managing sensitive data items when performing a computer-implemented digital forensic workflow using on-premises ("on-prem") and cloud resources, the method comprising:
storing, via a control computing node, the digital forensic workflow in a memory;
allocating, via the control computing node, forensic data processing tasks corresponding to portions of the digital forensic workflow to processing node computing devices ("processing nodes") for execution by the processing nodes, the processing nodes communicatively connected to the control computing node via at least one data communication network and including at least one cloud processing node and at least one on-premises ("on-prem") processing node; and
automatically restricting, via the control computing node, allocation of a given forensic data processing task to the at least one on-prem processing node when forensic data to be operated on in performance of the given processing task is tagged as sensitive.

15. A non-transitory computer-readable medium storing computer-executable instructions, the instructions executable by a computer processing to perform a method of managing sensitive data items when performing a computer-implemented digital forensic workflow using on-premises ("on-prem") and cloud resources, the method comprising:
storing, via a control computing node, the digital forensic workflow in a memory;
allocating, via the control computing node, forensic data processing tasks corresponding to portions of the digital forensic workflow to processing node computing devices ("processing nodes") for execution by the processing nodes, the processing nodes communicatively connected to the control computing node via at least one data communication network and including at least one cloud processing node and at least one on-premises ("on-prem") processing node; and
automatically restricting, via the control computing node, allocation of a given forensic data processing task to the at least one on-prem processing node when forensic data to be operated on in performance of the given processing task is tagged as sensitive.
